# EUROPÄISCHE PATENTSCHRIFT

(11) **EP 0 465 839 B1**
(45) Veröffentlichungstag und Bekanntmachung des Hinweises auf die Patenterteilung: **29.09.1993**
(21) Anmeldenummer: 91109385.4
(22) Anmeldetag: 07.06.1991
(51) Int. Cl.: A23L 1/211, A23L 3/01, A23B 7/005, A23B 7/01, A23B 9/04, A23B 9/08

(54) **Verfahren und Vorrichtung zum Quellen, Dämpfen oder Extrahieren und anschliessenden Trocknen**
Process and device for the squelling, damping or extraction and the subsequent drying
Procédé et appareil pour le gonflage, la vaporisation ou l'extraction et le séchage suivant ces opérations

(30) Priorität: 13.07.1990 DE 4022363
(43) Veröffentlichungstag der Anmeldung: 15.01.1992
(73) Patentinhaber: Satow, Kurt, D-28816 Stuhr (DE)
(72) Erfinder: Satow, Kurt, W-2820 Bremen-Stuhr (DE); Hoffmann, Manfred, W-2850 Bremerhaven (DE)
(74) Vertreter: Eisenführ, Speiser & Partner

(56) Entgegenhaltungen:
- DE-A- 3 721 762
- FR-A- 1 109 588
- US-A- 2 776 894
- US-A- 3 407 073

## Beschreibung

Die Erfindung betrifft ein Verfahren zum Quellen, Dämpfen oder Extrahieren und anschließenden Trocknen von schüttfähigen Stoffen in loser Form, unter Anwendung von Mikrowellenenergie, sowie eine Vorrichtung zur Durchführung dieses Verfahrens.

Es ist bereits bekannt, schüttfähige Stoffe in loser Form zum Quellen oder Dämpfen in einem geschlossenen Behälter Wasserdampf unter Überdruck auszusetzen. Auf diese Weise werden z.B. Rohkaffeebohnen, Knoblauch oder Zwiebelringe behandelt, um unerwünschte Reiz- oder Geruchsstoffe zu entfernen. Nach Abschluß dieser entsprechenden Behandlung werden die schüttfähigen Stoffe aus dem Behälter entfernt und anschließend einer Trocknungsanlage zugeführt.

Aus der DE-A-37 21 762 ist ein Verfahren zur Entkeimung von Lebensmitteln bekannt sowie zwei verschiedene Vorrichtungen zur Durchführung dieses Verfahrens. Bei der ersten Ausführungsform wird loses Schüttgut in einem Durchlaufverfahren per Förderband verarbeitet, es erfolgt dabei keine Anwendung von Druck oder Vakuum, weil der Behälter offen ist. In einer ersten Stufe wird das zu behandelnde Gut temperiert, in einer zweiten Stufe mit Dampf behandelt und in einer dritten Stufe Mikrowellenenergie ausgesetzt; außerdem schließt sich eine vierte Stufe zwecks Kühlung an.

Bei der zweiten Ausführungsform erfolgt zwar die Anwendung von Druck und Mikrowellenenergie, jedoch ist das zu behandelnde Gut auf einer stationären Platte angeordnet.

Der vorliegenden Erfindung liegt die Aufgabe zugrunde, ein Verfahren sowie eine entsprechende Vorrichtung vorzuschlagen, mit denen schüttfähige Stoffe in loser Form allen Verfahrensschritten ohne Umfüllen unterworfen werden, wobei diese Schritte besonders effektiv, gleichmäßig, materialschonend und in kurzer Zeit ablaufen sollen.

Diese Aufgabe wird gemäß dem erfindungsgemäßen Verfahren dadurch gelöst, daß die schüttfähigen Stoffe in einem geschlossenen Behälter zunächst Dampf, insbesondere Wasserdampf, unter Überdruck zum Quellen bzw. Dämpfen, oder Lösungsmittel zum Extrahieren, ausgesetzt und anschließend in demselben Behälter unter Anwendung von Vakuum und Mikrowellenenergie getrocknet werden, wobei die Stoffe in dem Behälter in loser Form gleichzeitig durch ein Mischwerk laufend umgewälzt werden. Hierdurch erfolgt eine besonders gleichmäßige und schonende Behandlung ohne lokale Überhitzungen. Auch wenn das Verfahren insbesondere zum Quellen oder Dämpfen und anschließenden Trocknen der schüttfähigen Stoffe in loser Form gedacht ist, so ist es mit dem erfindungsgemäßen Verfahren unter Austausch des ersten Verfahrensschrittes möglich, die schüttfähigen Stoffe zunächst mit einem Lösungsmittel zum Extrahieren in dem geschlossenen Behälter zu behandeln und anschließend in demselben Behälter den Trocknungsvorgang ablaufen zu lassen. Es ist sogar möglich, drei Schritte nacheinander auszuführen, nämlich den Schritt des Quellens bzw. Dämpfens in einem ersten Schritt, den Schritt des Extrahierens in einem zweiten Schritt und das Trocknen in einem dritten Schritt.

Eine vorteilhafte Vorrichtung zur Durchführung des erfindungsgemäßen Verfahrens ist dadurch gekennzeichnet, daß ein druck- und vakuumdichter Behälter vorgesehen ist, in dem ein Mischwerk angeordnet ist, daß der Behälter gleichzeitig mikrowellendicht ausgebildet ist und daß eine oder mehrere Mikrowelleneinheiten außerhalb des Behälters angeordnet sind und deren Mikrowellenenergie über Einspeiseöffnungen in den Behälter von außen her einspeisbar ist.

Obwohl die Anwendung von Mikrowellenenergie wegen der Gleichmäßigkeit der Aufheizung besonders wichtig ist, ist es gemäß einer vorteilhaften Ausführungsform sinnvoll, den Behälter doppelwandig auszuführen und über den entsprechenden Zwischenraum durch Dampf oder Heißwasser zusätzlich zu beheizen. Diese zusätzliche Heizung ist besonders beim Anfahren der erfindungsgemäßen Vorrichtung zweckmäßig und kann möglicherweise später abgeschaltet werden.

Die Dampfzuführung für den ersten Verfahrensschritt erfolgt zweckmäßigerweise durch im unteren Bereich des Behälters angeordnete Dampfanschlüsse. Besonders zweckmäßig ist es, wenn der Dampf über entsprechende Dampfdüsen im unteren Bereich eingeführt wird. Die Zuführung im unteren Bereich des Behälters hat den Vorteil, daß der Dampf besonders gleichmäßig das lose Schüttgut bis in den oberen Bereich des Behälters durchdringt.

Weitere vorteilhafte Ausgestaltungen der Erfindung sind den Unteransprüchen zu entnehmen.

Die Erfindung wird nachfolgend anhand eines Ausführungsbeispiels unter Bezug auf die beigefügten Zeichnungen näher erläutert.

Es zeigen:
- Fig. 1: eine Seitenansicht der erfindungsgemäßen Vorrichtung, und
- Fig. 2: eine Draufsicht auf die Vorrichtung nach Fig. 1.

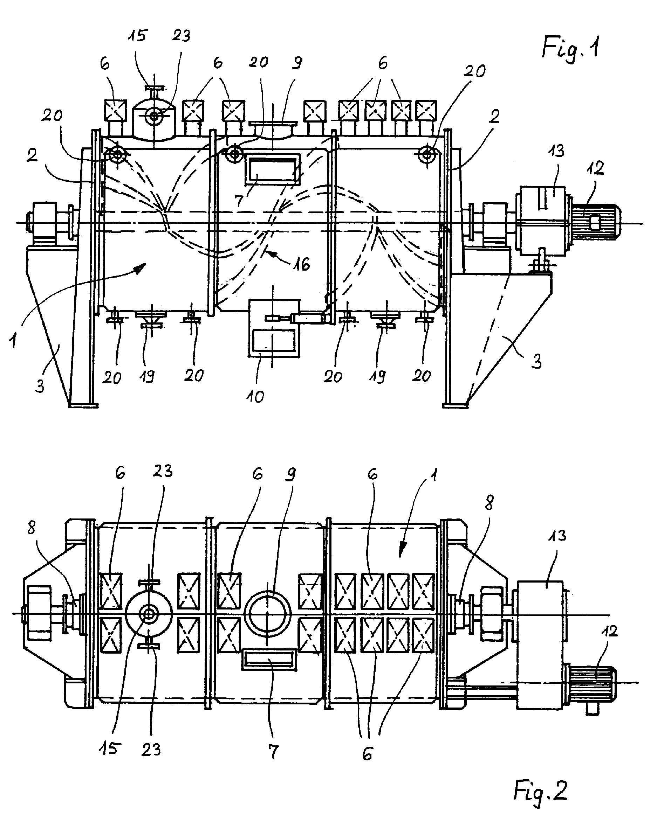

Die in den Fig. 1 und 2 gezeigte Vorrichtung enthält einen zylindrischen Behälter 1, der liegend angeordnet ist. An den Stirnwänden 2 sind Tragkonsolen 3 befestigt, auf denen der Behälter 1 auf dem Boden steht bzw. befestigt werden kann. Auf der Oberseite des zylindrischen Behälters 1 sind mehrere Mikrowellen-Einheiten 6 vorgesehen, deren Mikrowellenenergie über Einspeiseöffnungen in den zylindrischen Innenraum des Behälters 1 eingespeist werden können. Die Einspeiseöffnungen sind durch Verschlußstücke 14 aus dielektrischem Material druck- und vakuumdicht verschlossen.

Auf der Oberseite des zylindrischen Behälters 1 befindet sich eine Einfüllöffnung 9, und an der Unterseite des Behälters 1 ist ein Entleerungsschacht 10 angeordnet, über den die behandelten Stoffe entleert werden können. Sowohl die Einfüllöffnung 9 als auch der Entleerungsschacht 10 sind im Betrieb verschließbar, im Falle des Entleerungsschachtes 10 durch eine entsprechende Verschlußklappe. Die zu behandelnden Stoffe liegen in loser Form vor, d.h. sie sind nicht in Behältern oder Gebinden enthalten.

Innerhalb des zylindrischen Behälters 1 ist ein Mischwerk 16 vorgesehen, das im vorliegenden Beispiel als Doppelschnecken-Gegenstrommischwerk ausgebildet ist, um eine wirksame Umwälzung der zu behandelnden Stoffe innerhalb des Behälters 1 zu ermöglichen. Dies führt zu einer besonders gleichmäßigen und schonenden Behandlung. Das Mischwerk 16 ist an den Stirnseiten des Behälters 1 gelagert, und die Lagerwelle 18 ist durch druck- und vakuumdichte Stopfbuchsen 8 herausgeführt. An das eine Ende der Lagerwelle 18 ist über ein Getriebe 13 ein Antriebsmotor 12 angeschlossen, mit dem das Mischwerk 16 mit geeigneter Geschwindigkeit angetrieben werden kann. Die Drehzahl des Mischwerkes 16 ist durch eine entsprechende Verstell- oder Regelvorrichtung variierbar.

Da der Behälter 1 allseits verschlossen ist, aber gelegentlich eine Reinigung oder Inspektion des Inneren, insbesondere des Mischwerkes 16, erforderlich werden kann, ist eine seitliche Reinigungsöffnung 7 vorgesehen, die über einen druck- und vakuumdichten Verschluß verschlossen ist.

Im oberen Bereich des Behälters 1 ist ein in einen Dom mündender Vakuumanschluß vorgesehen, über den das Innere des Behälters 1 evakuiert werden kann. Außerdem sind im unteren Bereich des Behälters 1 Dampfanschlüsse 19 vorgesehen, über die zum Quellen bzw. Dämpfen der zu behandelnden Stoffe Dampf unter Druck eingeleitet werden kann. Außerdem sind im oberen Bereich des Behälters 1 noch weitere Anschlüsse 23 vorgesehen, über die zum Zwecke der Extraktion Lösungsmittel im Dombereich eingeleitet werden können. Der Behälter 1 ist sowohl druckdicht als vakuumdicht ausgebildet; dies gilt auch für die anderen Bauteile wie Stopfbuchsen 8, Verschlüsse usw.

Anstelle des im Ausführungsbeispiel verwendeten Doppelschnecken-Gegenstrommischwerkes 16 können auch andere Mischwerksarten oder Umwälzvorrichtungen verwendet werden, z.B. ein Schlagschaufel-Mischwerk.

Um die Heizung durch die Mikrowellen-Einheiten 6 zu ergänzen ist der Behälter 1 zweckmäßigerweise doppelwandig ausgeführt. Mit dem entsprechenden Zwischenraum stehen Heizungsanschlüsse 20 in Verbindung, über die Dampf oder Heißwasser zur Beheizung des Behälters 1 eingeleitet werden kann. Diese Zusatzheizung ist insbesondere beim Anfahren zweckmäßig, um die gesamte Aufheizenergie nicht durch die Mikrowellen-Einheiten 6 aufbringen zu müssen.

Mit der erfindungsgemäßen Vorrichtung können verschiedene Verfahren gemäß der Erfindung durchgeführt werden. Sollen die schüttfähigen Stoffe in loser Form, z.B. Rohkaffeebohnen, Knoblauch oder Zwiebelringe, zur Entfernung unerwünschter Reizstoffe und/oder Geruchsstoffe gequollen bzw. gedämpft werden, so wird nach Einfüllen der zu behandelnden Stoffe, und nach Anlauf des Mischwerkes 16, von unten her über die Dampfanschlüsse 19 Dampf, insbesondere Wasserdampf, eingeblasen, was zweckmäßigerweise über entsprechend angeordnete Düsen erfolgt. Der Dampf strömt gleichmäßig durch den gesamten Innenraum des Behälters 1 nach oben. Sobald dieser Vorgang abgeschlossen ist, wird der Behälter 1 über den Vakuumanschluß 15 evakuiert, und es wird anschließend Mikrowellenenergie über die Mikrowellen-Einheiten 6 zugeführt, wobei das Mischwerk 16 weiter umläuft.

Auf diese Weise werden ohne Umfüllen der zu behandelnden Stoffe beide Verfahrensschritte nacheinander in verhältnismäßig kurzer Zeit in schonender Weise durchgeführt. Die Durchführung beider Verfahrensschritte ohne Umfüllen hat auch den Vorteil, daß keine Wärmeenergie durch Umfüllen oder etwa durch zwei Behälter verloren geht.

Alternativ kann mit der Vorrichtung ein Verfahren durchgeführt werden, das aus den Schritten Extrahieren mittels eines Lösungsmittels und anschließendem Trocknen unter Vakuum- und Mikrowellenenergie erfolgt. Schließlich ist es auch möglich, in drei aufeinanderfolgenden Schritten die zu behandelnden, schüttfähigen Stoffe in loser Form in einem ersten Schritt unter Zuleitung von Dampf zu quellen bzw. zu dämpfen, dann anschließend unter Zuführung eines Lösungsmittels bestimmte Bestandteile zu extrahieren und anschließend unter Anwendung von Vakuum und Mikrowellenenergie die Stoffe zu trocknen.

## Patentansprüche

1. Verfahren zum Quellen, Dämpfen oder Extrahieren und anschließenden Trocknen von schüttfähigen Stoffen in loser Form, unter Anwendung von Mikrowellenenergie,
dadurch gekennzeichnet, daß die schüttfähigen Stoffe in einem geschlossenen Behälter (1) zunächst Dampf, insbesondere Wasserdampf, unter Überdruck zum Quellen bzw. Dämpfen, oder Lösungsmittel zum Extrahieren, ausgesetzt und anschließend in demselben Behälter unter Anwendung von Vakuum und Mikrowellenenergie getrocknet werden, wobei die Stoffe in dem Behälter (1) in loser Form gleichzeitig durch ein Mischwerk (16) laufend umgewälzt werden.

2. Verfahren nach Anspruch 1,
dadurch gekennzeichnet, daß beide Schritte des Quellens bzw. Dämpfens und der Schritt des Extrahierens durchgeführt werden, und zwar nacheinander, bevor die Stoffe anschließend getrocknet werden.

3. Vorrichtung zur Durchführung des Verfahrens nach Anspruch 1 oder 2,
dadurch gekennzeichnet, daß ein druck- und vakuumdichter Behälter (1) vorgesehen ist, in dem ein Mischwerk (16) angeordnet ist, daß der Behälter (1) gleichzeitig mikrowellendicht ausgebildet ist und daß eine oder mehrere Mikrowellen-Einheiten (6) außerhalb des Behälters (1) angeordnet sind und deren Mikrowellenenergie über Einspeiseöffnungen in den Behälter (1) von außen her einspeisbar ist.

4. Vorrichtung nach Anspruch 3,
dadurch gekennzeichnet, daß der Behälter (1) doppelwandig ausgeführt und über den entsprechenden Zwischenraum durch Dampf oder Heißwasser zusätzlich beheizbar ist.

5. Vorrichtung nach Anspruch 3 oder 4,
gekennzeichnet durch im unteren Bereich des Behälters (1) angeordnete Dampfanschlüsse (19).

6. Vorrichtung nach einen der Ansprüche 3 bis 5,
dadurch gekennzeichnet, daß die Einspeiseöffnungen durch Verschlußstücke aus dielektrischem Material verschlossen sind.

7. Vorrichtung nach einem der Ansprüche 3 bis 6,
dadurch gekennzeichnet, daß der Behälter (1) als liegender, zylindrischer Behälter ausgebildet ist.

8. Vorrichtung nach Anspruch 7,
dadurch gekennzeichnet, daß das Mischwerk (16) von außen mit wahlweise verschiedenen Geschwindigkeiten antreibbar ist und die Lagerwelle (18) des Mischwerks (16) über druck- und vakuumdichte Stopfbuchsen (8) herausgeführt ist.

9. Vorrichtung nach Anspruch 7,
dadurch gekennzeichnet, daß der Behälter (1) auf der Oberseite an einem Ende mit einer verschließbaren Einfüllöffnung (9) und auf der Unterseite mit einem verschließbaren Entleerungsschacht (10) versehen ist.

10. Vorrichtung nach Anspruch 9,
dadurch gekennzeichnet, daß seitliche, verschließbare Reinigungsöffnungen (7) vorgesehenen sind.

11. Vorrichtung nach Anspruch 9 oder 10,
dadurch gekennzeichnet, daß die Mikrowellen-Einheiten (6) auf der Oberseite im mittleren Bereich des Behälters (1) angeordnet sind.

12. Vorrichtung nach einem der Ansprüche 7 bis 11,
dadurch gekennzeichnet, daß das Mischwerk (16) als Doppelschnecken-Gegenstrommischwerk ausgebildet ist.

## Claims

1. Method for swelling, steaming or extracting followed by drying of loose bulk material using microwave energy,
characterized by the fact that the bulk material in a closed vessel (1) is first subjected to steam, notably water steam, under overpressure, for swelling and steaming - or to solutions for extracting - and is afterwards dried in the same vessel using vacuum and microwave energy whilst, at the same time, the bulk material contained loosely in the vessel (1) is continuously agitated by a mixing mechanism (16).

2. Method according to Claim 1,
characterized by the fact that the two steps of swelling and steaming and the step of extracting are carried out successively before the material is dried afterwards.

3. Apparatus for carrying out the method according to Claims 1 or 2,
characterized by the fact that a pressure-tight and vacuum-tight vessel (1) is provided, in which a mixing mechanism (16) is arranged,
that the vessel (1) is of microwave-tight construction,
and that one or more microwave units (6) are arranged outside the vessel (1) and their microwave energy being fed into the vessel (1) from the outside via injection openings.

4. Apparatus according to Claim 3,
characterized by the fact that the vessel (1) is of double-walled construction and can additionally be heated via the gap in-between using steam or hot water.

5. Apparatus according to Claims 3 or 4,
characterized by the fact that steam connections (19) are arranged in the lower part of the vessel (1).

6. Apparatus according to one of the Claims 3 to 5,
characterized by the fact that the injection openings are closed off by closure pieces made of dielectric material.

7. Apparatus according to one of the Claims 3 to 6,
characterized by the fact that the vessel (1) is constructed as a horizontal, cylindrical container.

8. Apparatus according to Claim 7,
characterized by the fact that the mixing mechanism (16) can be externally driven at selectably different speeds and that the bearing shaft (18) of the mixing mechanism (16) is brought out through pressure- and vacuum-tight stuffing boxes (8).

9. Apparatus according to Claim 7,
characterized by the fact that the vessel (1) is provided on the top side, at one end, with a closable filling opening (9) and on the underside with a closable emptying shaft (10).

10. Apparatus according to Claim 9,
characterized by the fact that closable cleaning openings (7) are provided laterally.

11. Apparatus according to Claims 9 or 10,
characterized by the fact that the microwave units (6) are arranged on the top side in the center part of the vessel (1).

12. Apparatus according to one of the Claims 7 to 11,
characterized by the fact that the mixing mechanism (16) is constructed as a double-worm counterflow mixing mechanism.

## Revendications

1. Procédé pour le gonflement, la vaporisation ou l'extraction des matières en vrac mobiles, et de leur séchage ensuite, en employant de l'énergie micro-onde,
caracterisé par le fait que les matières en vrac, qui se trouvent dans un récipient fermé (1), sont exposées au vapeur en premier lieu, particulièrement au vapeur d'eau, à surpression, pour leur gonflement respectivement vaporisation - ou exposées à une solution pour l'extraction - et pour leur séchage ensuite, dans le même récipient, en employant du vide et de l'énergie micro-ondes, pendant que les matières contenues dans le récipient (1) en forme mobile sont agitées constamment par un dispositif de mélange (16) en même temps.

2. Procédé selon la revendication 1,
caracterisé par le fait que les deux mesures, ça veut dire celle du gonflement respectivement celle de la vaporisation, et la mesure de l'extraction sont effectuées successivement avant du séchage des matières ensuite.

3. Appareil à effectuer le procédé selon les revendications 1 ou 2,
caracterisé par le fait qu'un récipient (1) de construction étanche à la pression et au vide est pourvu, dans lequel se trouve un dispositif de mélange (16),
que le récipient (1) est aussi de construction étanche aux micro-ondes,
et qu'il y a une ou plusieurs unités micro-ondes (6) disposées à l'extérieur du récipient (1) et dont l'énergie micro-ondes peut être alimentée dans le récipient (1) de l'extérieur via des ouvertures d'injection.

4. Appareil selon la revendication 3,
caracterisé par le fait que le récipient (1) est de construction à deux parois et qu'il, en plus, peut être chauffé via l'interstice entre les deux parois au moyen de vapeur ou d'eau chaude.

5. Appareil selon les revendications 3 ou 4,
caracterisé par des raccords à vapeur (19) qui sont disposés dans la partie inférieure du récipient (1).

6. Appareil selon l'une des revendications 3 à 5,
caracterisé par le fait que les ouvertures d'injection sont obturées par les pièces de fermeture en matériel diélectrique.

7. Appareil selon l'une des revendications 3 à 6,
caracterisé par le fait que le récipient (1) est construit comme conteneur couché et cylindrique.

8. Appareil selon la revendication 7,
caracterisé par le fait que le dispositif de mélange (16) peut être actionné de l'extérieur, aux vitesses facultativement variées, et que l'arbre palier (18) du dispositif de mélange (16) est apporté en dehors par des presses-étoupes (8) étanches à la pression et au vide.

9. Appareil selon la revendication 7,
caracterisé par le fait que le récipient (1) est pourvu d'une ouverture de remplissement fermante (9) au côté supérieur, à une extrémité, et d'une cheminée de vidange (10) fermante au côté inférieur.

10. Appareil selon la revendication 9,
caracterisé par le fait qu'il y a des ouvertures de nettoyage fermantes (7) disposées sur le côté.

11. Appareil selon les revendications 9 ou 10,
caracterisé par le fait que les unités micro-ondes (6) sont disposées au côté supérieur, dans la partie centrale, du récipient (1).

12. Appareil selon l'une des revendications 7 à 11,
caracterisé par le fait que le dispositif de mélange (16) est construit comme dispositif de mélange à deux vis contre-courant.
